# FASCICULE DE BREVET EUROPEEN

(11) **EP 0 686 780 B1**
(45) Date de publication et mention de la délivrance du brevet: **23.09.1998**
(21) Numéro de dépôt: 95401245.6
(22) Date de dépôt: 30.05.1995
(51) Int. Cl.: F16C 1/26

(54) **Butée pour câble de commande**
Anschlussteil für Betätigungskabel
Mounting fitting for control cable

(30) Priorité: 31.05.1994 FR 9406591
(43) Date de publication de la demande: 13.12.1995
(73) Titulaire: SYSTEMES BLG, F-60730 Ste Geneviève (FR)
(72) Inventeur: Vicogne, Sylvain, F-60370 Berthecourt (FR)
(74) Mandataire: Schrimpf, Robert

(56) Documents cités:
- FR-A- 2 590 338
- GB-A- 837 490
- US-A- 4 773 280

## Description

La présente invention concerne le domaine des câbles de commande à distance, comprenant une gaine extérieure de câble et une âme intérieure montée à coulissement dans ladite gaine. Ces câbles de commande sont encore connus sous le nom de câbles Bowden. L'invention a trait plus particulièrement à une butée destinée à la fixation d'une extrémité d'une gaine de câble de commande dans un perçage d'une tôle.

Les câbles de commande à distance sont utilisés, sur les véhicules automobiles notamment, pour transmettre à un organe récepteur un effort de commande exercé sur l'âme intérieure du câble par un organe actionneur. Pour permettre une transmission intégrale de cet effort de commande, la gaine du câble doit être immobilisée à ses extrémités, au moins lors du fonctionnement de l'organe actionneur. Il est connu pour ce faire de monter la gaine à ses extrémités dans des butées fixes respectives, traversées par l'âme intérieure du câble et situées à proximité des organes actionneur et récepteur.

Lorsque la butée est montée dans un perçage ménagé dans le tablier séparant l'habitacle et le compartiment moteur d'un véhicule automobile, il est important que la butée ferme de façon étanche aux sons le perçage, pour éviter que le bruit de fonctionnement du moteur ne se propage dans l'habitacle.

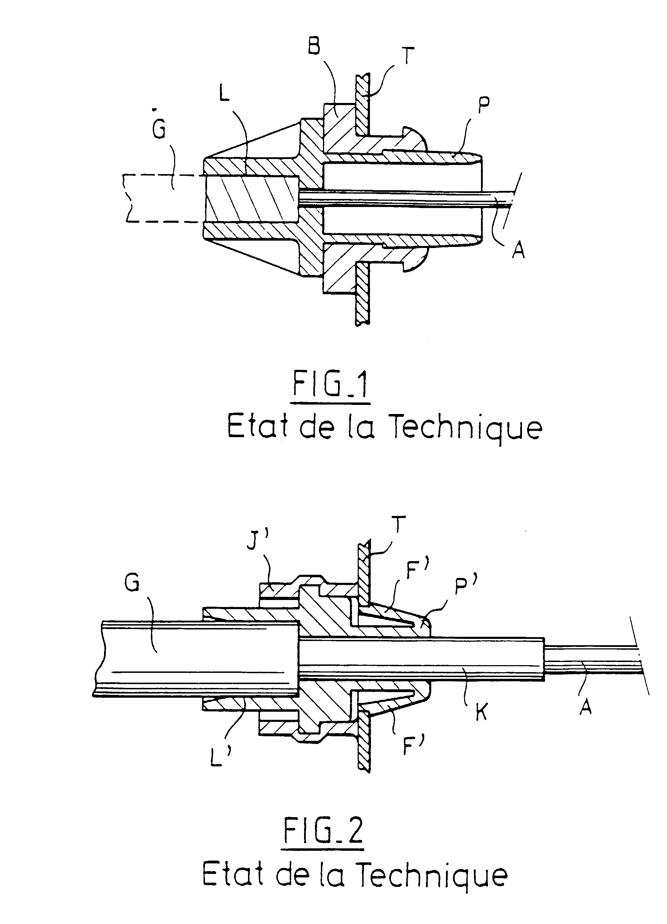

On a représenté sur les figures 1 et 2 deux exemples de butées connues, à monter dans un perçage d'un tablier T de véhicule automobile.

La butée représentée sur la figure 1 comporte une pièce d'étanchéité B, en caoutchouc, ayant la forme d'un rivet, insérée dans un perçage du tablier T et venant en butée axialement dans celui-ci par un épaulement. Un pied de fixation P, en matière plastique rigide, est introduit par une première extrémité dans la pièce d'étanchéité et vient en prise avec un épaulement interne de celle-ci. Ce pied de fixation P présente, du côté opposé à sa première extrémité, un logement L dans le fond duquel la gaine G du câble de commande vient axialement en butée. Le fond de ce logement L est percé pour le passage de l'âme intérieure A du câble de commande, reliée à un levier de pédale. Ce type de butée connue présente l'inconvénient de ne pas filtrer les vibrations parcourant la gaine, de sorte que ces dernières peuvent être ressenties par le conducteur appuyant sur la pédale, et présente également l'inconvénient de se démonter facilement en cas de traction accidentelle sur la gaine du câble de commande.

La butée représentée sur la figure 2 comporte un pied de fixation P', en matière plastique rigide, à introduire par une première extrémité dans un perçage du tablier T. Ce pied de fixation P' comporte des languettes d'accrochage F' s'étendant à partir de sa première extrémité en écartement l'une de l'autre, aptes à se déformer élastiquement en rapprochement l'une de l'autre au contact des bords du perçage lors de l'introduction du pied de fixation P' pour ensuite, en reprenant leur disposition initiale, retenir axialement ce dernier dans le perçage. Une bague d'étanchéité J' est rapportée extérieurement sur le pied de fixation P', du côté du compartiment moteur, et s'applique de façon étanche contre une face du tablier T. La gaine G est reçue dans un logement L' du pied de fixation P', situé du côté opposé à sa première extrémité, et ce logement comporte en son fond un passage pour une enveloppe tubulaire interne K de la gaine du câble de commande, à l'intérieur de laquelle l'âme intérieure A peut coulisser. La gaine G comporte, outre l'enveloppe K, une armature métallique hélicoïdale enroulée sur celle-ci qui assure l'essentiel de la tenue mécanique de la gaine. Cette armature métallique vient en butée axialement dans le fond du logement L'. Ce type de butée connue présente une meilleure résistance à l'arrachement que la butée représentée sur la figure 1. Toutefois, cette résistance accrue s'avère être un désavantage lorsqu'il s'agit de démonter le câble et que les languettes d'accrochage F' sont inaccessibles, par exemple à cause du pédalier du véhicule. Dans ce cas, le démontage du câble s'effectue en cassant les languettes d'accrochage, ce qui impose par la suite le remplacement complet du câble, étant donné que l'âme intérieure est habituellement munie à ses extrémités d'embouts sertis qui interdisent le montage d'une nouvelle butée sur l'âme. Par ailleurs, ce type de butée connue n'offre pas entière satisfaction en ce qui concerne la filtration de vibrations se propageant dans la gaine.

Du FR-A-2 590 338 il est connu de raccorder la gaine et le pied de fixation avec un manchon en matériau élastomère, qui fonctionne comme amortisseur des vibrations.

La présente invention a pour objet de réaliser une butée perfectionnée remédiant aux inconvénients précités, apte à filtrer des vibrations parcourant la gaine.

L'invention y parvient par le fait que la butée comprend :
- un pied de fixation allongé en matière plastique rigide, à insérer par une première extrémité axiale dans le perçage, traversé selon son axe longitudinal par un passage central pour une âme intérieure de câble montée à coulissement dans ladite gaine, ledit pied de fixation comprenant des moyens d'ancrage aptes à retenir axialement le pied de fixation au terme de son insertion dans le perçage, et une paroi substantiellement tubulaire s'étendant axialement selon ledit axe longitudinal et définissant un logement ouvert sur l'extrémité axiale du pied de fixation opposée à ladite première extrémité pour recevoir une extrémité de ladite gaine, et
- une pièce d'étanchéité en matériau élastomère retenue sur le pied de fixation, qui sert à étancher le perçage,
et par le fait que ladite pièce d'étanchéité est conformée pour isoler la gaine du pied de fixation de manière à s'opposer à la transmission de vibrations parcourant la gaine vers le pied de fixation.

Avantageusement, ladite extrémité de gaine est munie d'un embout d'extrémité en matière plastique rigide.

Dans une réalisation de l'invention, la pièce d'étanchéité est surmoulée sur ledit embout d'extrémité.

Avantageusement, la pièce d'étanchéité présente une partie en forme de manchon apte à s'interposer radialement entre la gaine (par l'intermédiaire le cas échéant dudit embout d'extrémité, rapporté sur la gaine) et ladite paroi tubulaire du pied de fixation. De préférence, ladite partie en forme de manchon présente une collerette formant radialement saillie vers l'intérieur, apte à s'interposer axialement entre la gaine (par l'intermédiaire le cas échéant dudit embout d'extrémité) et le pied de fixation.

Dans le cas où une couche de matériau insonorisant est rapportée sur une face du tablier du véhicule, la butée selon l'invention comporte avantageusement une pièce de maintien de la couche de matériau insonorisant, à rapporter sur ladite première extrémité du pied de fixation après mise en place de ce dernier dans le perçage, et conformée pour s'appliquer axialement sur la couche de matériau insonorisant.

L'invention a également pour objet un câble de commande équipé d'une butée telle que précitée.

D'autres caractéristiques et avantages de l'invention apparaîtront à la lecture de la description détaillée qui va suivre, d'exemples de réalisation non limitatifs de l'invention, et à l'examen du dessin annexé sur lequel :
- les figures 1 et 2, précédemment décrites, illustrent l'état de la technique,
- la figure 3 est une vue en coupe axiale d'une butée conforme à un premier exemple de réalisation de l'invention, insérée dans un perçage d'une tôle,
- la figure 4 est une coupe axiale représentant le pied de fixation isolément,
- la figure 5 est une vue de dessus selon la flèche V de la figure 4,
- la figure 6 est une vue analogue à la figure 3, après montage d'une pièce de maintien sur le pied de fixation,
- la figure 7 est une vue en coupe axiale de la pièce d'étanchéité équipant la butée représentée sur les figures 3 et 6,
- la figure 8 est une vue en coupe axiale d'un embout à monter sur l'extrémité de la gaine,
- la figure 9 est une vue en coupe axiale de la pièce de maintien représentée sur la figure 6,
- la figure 10 est une vue de dessus selon la flèche X de la figure 9,
- la figure 11 est une vue analogue à la figure 10, le joint d'étanchéité enlevé,
- la figure 12 est une vue de côté selon la flèche XII de la figure 11,
- la figure 13 est une vue analogue à la figure 10, représentant le joint d'étanchéité isolément,
- la figure 14 est une vue de côté selon la flèche XIV de la figure 13,
- la figure 15 illustre le montage de la pièce de maintien sur le pied de fixation,
- la figure 16 représente une butée conforme à une deuxième réalisation de l'invention,
- les figures 17 et 18 sont des coupes axiales de la pièce d'étanchéité et de l'embout d'extrémité selon deux plans de coupe perpendiculaires entre eux.

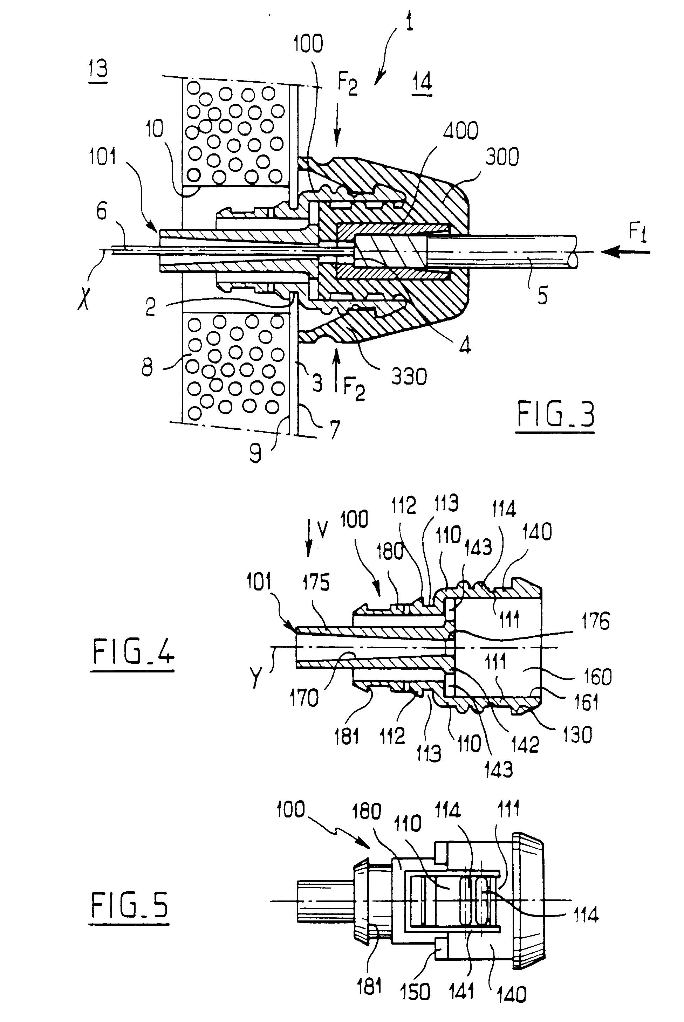

La butée 1 conforme à l'invention représentée sur la figure 3 comprend un pied de fixation 100, en matière plastique rigide, à introduire par une première extrémité 101 dans un perçage circulaire 2 d'un tablier 3 séparant l'habitacle 13 et le compartiment moteur 14 d'un véhicule automobile. Une couche de matériau insonorisant 8 est rapportée sur la face 9 du tablier 3 située du côté de l'habitacle. Une ouverture circulaire 10 est ménagée dans cette couche de matériau insonorisant 8, pour le passage d'une extrémité de l'âme intérieure 6 d'un câble de commande 5, reliée à un levier de pédale non représenté, monté à pivotement sur le tablier 3. On a référencé X l'axe du perçage 2 et de l'ouverture circulaire 10. La butée 1 comporte une pièce d'étanchéité 300 en matériau élastomère, rapportée sur le pied de fixation 100 et s'appliquant par une lèvre d'étanchéité 330 sur la face 7 du tablier 3, située du côté du compartiment moteur 14.

Le pied de fixation 100, représenté isolément sur la figure 4, est allongé selon un axe Y et comprend une paroi tubulaire 140 définissant un logement 160 cylindrique de révolution autour de l'axe Y. La paroi tubulaire 140 présente deux découpes 141 diamétralement opposées dans lesquelles s'étendent deux languettes respectives 110, se raccordant à une extrémité 111 sur la paroi tubulaire 140. Les languettes 110 présentent à leur extrémité opposée, libre, une gorge 113 ouverte radialement vers l'extérieur et présentant, vue en coupe dans un plan contenant l'axe Y, une section en forme de U. La largeur d'ouverture des gorges 113 de chaque languette 110, mesurée parallèlement à l'axe Y, correspond à l'épaisseur du tablier 3. La paroi tubulaire 140 présente à une extrémité axiale un bord libre circulaire centré sur l'axe Y et se raccorde à l'autre extrémité sur une paroi plane 142 s'étendant perpendiculairement à l'axe Y et formant le fond du logement 160. Deux évidements 143 diamétralement opposés sont ménagés sur cette paroi 142 pour autoriser le débattement radial vers l'intérieur des languettes 110 lors de l'introduction ou du retrait du pied de fixation 100 dans le perçage 2 du tablier 3. Les languettes 110 présentent sur leur surface radialement externe, à leur extrémité libre, des rampes inclinées 112 convergeant en direction de l'extrémité 101, destinées à faciliter l'insertion du pied de fixation dans le perçage 2, et à proximité de leur extrémité 111 des bossages 114 formant radialement saillie vers l'extérieur. Ces bossages 114 sont destinés à faciliter l'application de forces dirigées radialement vers l'axe Y sur les languettes 110 pour les déformer en rapprochement l'une de l'autre et permettre ainsi la libération du pied de fixation 100 du perçage 2, comme cela sera précisé dans la suite. La paroi tubulaire 140 présente sur son bord libre une collerette 130 formant saillie radialement vers l'extérieur, destinée à retenir sur le pied de fixation 100 la pièce d'étanchéité 300.

Le pied de fixation 100, muni de la pièce d'étanchéité 300, est avantageusement équipé d'une pièce de maintien 200 de la couche de matériau insonorisant 8, à rapporter sur la première extrémité 101 du pied de fixation 100, après mise en place de ce dernier dans le perçage 2. Comme cela va être précisé dans la suite, la pièce de maintien 200 est conformée pour s'appliquer axialement sur la couche de matériau insonorisant 8 et la maintenir appliquée contre la face 9 du tablier 3.

Conformément à une caractéristique avantageuse de l'invention, le pied de fixation 100 et la pièce de maintien 200 comportent des premiers et seconds moyens de guidage respectifs, aptes à coopérer pour guider en translation la pièce de maintien 200 selon l'axe Y lors de son montage sur le pied de fixation 100.

Dans l'exemple de réalisation décrit, les premiers moyens de guidage sont constitués par un conduit 175 à l'intérieur duquel est ménagé un passage pour l'âme intérieure 6 du câble. Le conduit 175, symétrique de révolution autour de l'axe Y, présente une extrémité libre définissant ladite première extrémité 101 du pied de fixation 100 et se raccorde à l'autre extrémité sur la paroi 142, du côté opposé au logement 160. Les seconds moyens de guidage sont constitués par un fourreau 223, symétrique de révolution autour d'un axe de symétrie W, apte à coulisser sur le conduit 175. Ce dernier présente une section interne évasée en direction de l'extrémité 101 du pied de fixation 100, afin d'autoriser un léger débattement angulaire de l'âme intérieure 6 du câble autour d'un axe perpendiculaire à l'axe longitudinal Y.

Conformément à une caractéristique avantageuse de l'invention, le pied de fixation 100 et la pièce de maintien 200 comportent des premiers et seconds moyens de retenue respectifs aptes à coopérer pour retenir axialement la pièce de maintien 200 sur le pied de fixation 100.

Dans l'exemple de réalisation décrit, les premiers moyens de retenue sont constitués par une jupe tubulaire 180 présentant un épaulement annulaire 181. Les seconds moyens de retenue sont constitués par trois pattes d'accrochage aptes à se déformer élastiquement lors du montage de la pièce de maintien 200 sur le pied de fixation 100 pour venir en prise sur l'épaulement 181 et retenir axialement la pièce de maintien 200 sur le pied de fixation 100. De préférence, comme représenté, les trois pattes d'accrochage 210 sont équiréparties angulairement autour de l'axe W.

Conformément à l'invention, la pièce d'étanchéité 300 est apte à isoler la gaine 5 du pied de fixation 100 pour éviter que des vibrations parcourant la gaine 5 ne se propagent au travers du pied de fixation 100 jusque dans l'habitacle du véhicule et soient ressenties par le conducteur.

La pièce d'étanchéité 300 présente une gorge 310 symétrique de révolution autour d'un axe de symétrie Z, à engager sur la paroi tubulaire 140 du pied de fixation. La gorge 310 est délimitée radialement, à l'intérieur, par la surface radialement externe d'une partie en forme de manchon 320 et radialement à l'extérieur, par la lèvre d'étanchéité 330 présentant un bord libre 340 destiné à s'appliquer sur la face 7 de la tôle 3. La lèvre d'étanchéité 330 présente sur sa surface radialement interne, au voisinage du fond de la gorge 310, un épaulement 331 apte à venir en prise sur la collerette 130 afin de retenir la pièce d'étanchéité 300 sur le pied de fixation 100. La partie en forme de manchon 320 présente une surface radialement externe annelée, destinée à s'appliquer sur la surface radialement interne 161 du logement 160.

Dans l'exemple décrit, cette surface externe annelée présente trois bossages annulaires 322 espacés axialement selon l'axe Z. La partie en forme de manchon 320 définit, à l'intérieur de la pièce d'étanchéité 300, un logement 323 destiné à recevoir un embout d'extrémité 400 emmanché à force sur l'extrémité libre 4 de la gaine 5 du câble de commande. Le logement 323 est délimité radialement par une surface 324 cylindrique de révolution autour de l'axe Z et axialement, du côté du bord libre 340 de la lèvre d'étanchéité 330, par une paroi transversale 325 percée en son centre en 329 pour le passage de l'âme intérieure 6 du câble de commande, et du côté opposé, par un rétrécissement 326 destiné à s'appliquer sur la surface externe de la gaine 5 et retenir axialement l'embout d'extrémité 400 dans le logement 323.

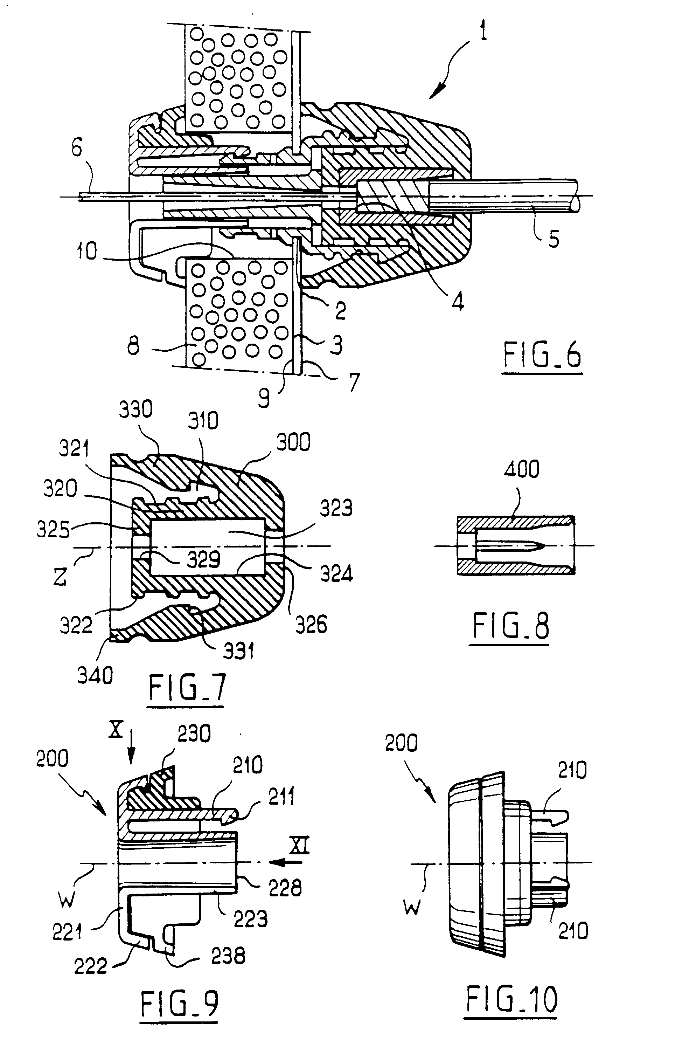

On a représenté isolément sur les figures 9 à 14 la pièce de maintien 200. Le fourreau 223 se prolonge, à l'opposé de son extrémité libre par laquelle il est enfilé sur le conduit 175, par une paroi transversale 221 s'étendant radialement vers l'extérieur perpendiculairement à l'axe W. Cette dernière présente un bord recourbé en direction de l'extrémité libre du fourreau 223. Les languettes d'accrochage 210 s'étendent parallèlement à l'axe W et se raccordent à une extrémité sur la paroi transversale 221. Elles sont munies à l'autre extrémité, libre, de dents d'accrochage 211 destinées à venir en prise avec l'épaulement annulaire 181 du pied de fixation 100. Le bord libre 222 présente, sur sa surface radialement interne, trois saillies d'accrochage 225 s'étendant radialement vers l'intérieur et angulairement autour de l'axe W sur une quarantaine de degrés environ, symétriquement de part et d'autre de plans contenant l'axe W et l'axe de chacune des languettes 210. Ces saillies 225 sont destinées à s'engager dans des évidements 234 de forme complémentaire d'un joint d'étanchéité 230 en matière élastomère.

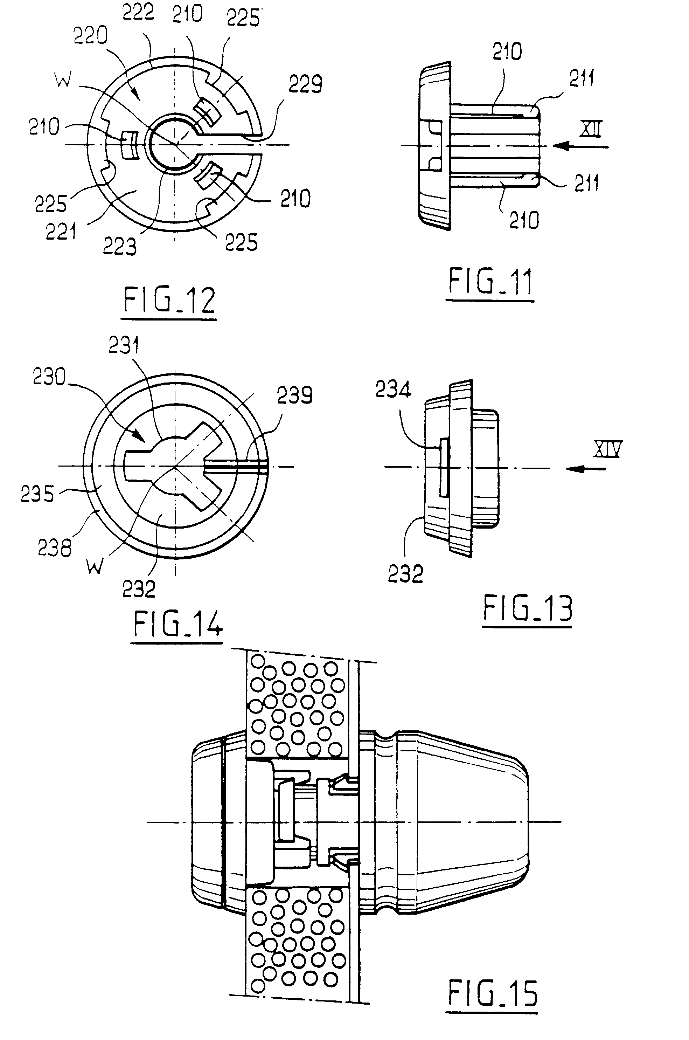

Ce joint 230, représenté isolément sur les figures 13 et 14, comporte une ouverture 231 en son centre pour le passage du fourreau 221 et des languettes 210. Il présente une face frontale 232 conformée pour venir en appui contre la paroi transversale 221 et le joint 230 vient se loger dans l'espace annulaire compris entre le fourreau 223 et le bord recourbé 222. Le joint 230 présente une lèvre annulaire 238 apte à s'appliquer sur la couche de matériau insonorisant 8.

En cas de nécessité de montage, lorsqu'il n'est pas possible d'enfiler directement la pièce de maintien 200 et le joint 230 sur l'âme du câble en partant de l'extrémité libre de cette dernière, on munit la pièce de maintien 200 et le joint 230 de fentes comme suit.

La paroi 221 est traversée radialement par une fente 229 s'étendant vers l'extérieur depuis l'axe W. Le joint 230 comporte également une fente 239 s'étendant radialement vers l'extérieur depuis l'axe W. La largeur d'ouverture de la fente 229 est choisie supérieure au diamètre de l'âme intérieure 6 du câble pour permettre le passage de l'âme 6. De préférence, la largeur d'ouverture de la fente 239 est inférieure à la largeur d'ouverture de la fente 229 de façon à fermer, en reprenant élastiquement sa forme initiale après passage de l'âme intérieure 6, la fente 229.

Le montage de la butée sur le câble de commande s'effectue de la façon suivante.

On commence par insérer à force l'embout d'extrémité 400 sur l'extrémité libre 4 de la gaine du câble de commande 5, puis la gaine ainsi équipée est introduite dans le logement 323 de la partie en forme de manchon 320 de la pièce d'étanchéité 300. Pour faciliter le montage de la gaine dans l'embout 400, l'ouverture de ce dernier est évasée. Des nervures longitudinales peuvent être prévues comme représenté sur le corps tubulaire de l'embout 400 pour augmenter l'effort radial de serrage de la gaine. Lors de l'insertion dans la pièce d'étanchéité 300, le rétrécissement 326 bordant l'entrée du logement 323 se déforme radialement de façon élastique vers l'extérieur. Au terme de l'insertion, c'est-à-dire lorsque l'embout d'extrémité 400 vient axialement en butée contre le fond 325 de la partie en forme de manchon 320, le rétrécissement 326 reprend sa forme initiale et retient l'embout d'extrémité 400 dans la pièce d'étanchéité 300. Le rétrécissement 326 s'applique avantageusement de façon étanche sur la surface externe de la gaine du câble de commande 5. Ensuite, la pièce d'étanchéité 300, à l'intérieur de laquelle est retenue l'extrémité 4 de la gaine, est engagée par sa gorge annulaire 310 sur la paroi tubulaire 140 du pied de fixation 100, jusqu'à l'engagement de l'épaulement 331 sur la collerette 130. Cette dernière est avantageusement biseautée extérieurement pour faciliter la mise en place de la pièce d'étanchéité 300.

Le montage de l'extrémité du câble de commande dans le tablier 3, au moyen de la butée 1 s'effectue ensuite en exerçant une force dirigée axialement selon la flèche F₁ de la figure 3. Lors de l'insertion du pied de fixation 100 dans le perçage 2, les languettes d'ancrage 110 se déforment en rapprochement l'une de l'autre par appui des rampes 112 contre les bords du perçage 2. Elles reprennent, après franchissement du perçage 2 leur forme initiale pour retenir axialement le pied de fixation 100 dans celui-ci, par engagement du tablier 3 dans les gorges 113.

Grâce à la configuration particulière des languettes 110, l'effort à exercer pour monter le pied de fixation dans le perçage 2 peut être aussi faible que 5 daN, tout en assurant par la suite une retenue efficace du pied de fixation 100, insensible à des tractions accidentelles exercées sur le câble de commande. Après mise en place du pied de fixation 100, la pièce de maintien 200 équipée du joint 230 est engagée, au moyen des fentes 229 et 239 sur l'âme intérieure 6 du câble de commande, puis le fourreau 223 est enfilé sur le conduit de guidage 175 jusqu'à accrochage des dents 211 sur l'épaulement 181. La pièce de maintien 200 est alors retenue axialement sur le pied de fixation 100 et le joint 230 s'interpose axialement entre la paroi transversale 221 et la couche de matériau insonorisant 8, et radialement entre l'ouverture 10 et la surface radialement externe du fourreau 223.

Pour le démontage de la butée 1, on commence par enlever la pièce de maintien 200, en s'aidant si nécessaire d'un tournevis dont la lame est engagée dans la fente 229 pour l'élargir et faciliter le dégagement des dents 211. Après avoir enlevé la pièce de maintien 200, un effort est exercé selon les flèches F₂ de la figure 3 sur chacune des languettes d'ancrage 110 jusqu'à dégager les gorges 113 des bords du perçage 2, puis, en maintenant cet effort sur les languettes 110, on exerce sur le pied de fixation un effort dirigé dans le sens contraire à la flèche F₁ pour le retirer du perçage 2.

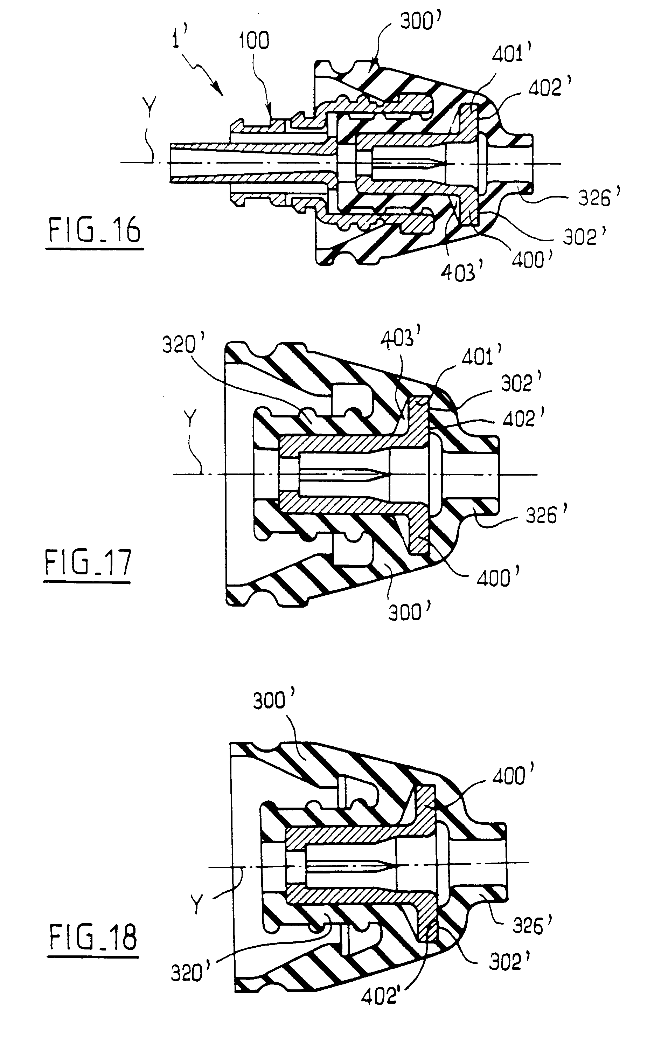

On a représenté sur les figures 16 à 18 une variante 1' de réalisation de la butée, comprenant un pied de fixation identique au pied de fixation 100 précédemment décrit et une pièce d'étanchéité 300' destinée à retenir un embout d'extrémité 400' rapporté sur la gaine.

La pièce d'étanchéité 300' présente un logement annulaire 302' généralement symétrique de révolution autour de l'axe Y du pied de fixation 100, dans lequel se loge une collerette 401' de l'embout d'extrémité 400'.

La collerette 401' s'étend radialement vers l'extérieur perpendiculairement à l'axe Y, au niveau de l'ouverture d'introduction de la gaine dans l'embout 400'. Quatre nervures 403', équiréparties autour de l'axe Y, viennent renforcer le raccordement de la collerette 401' sur le corps tubulaire du reste de l'embout 400'. La collerette 401' est délimitée axialement par une face frontale 402' perpendiculaire à l'axe Y, venant s'appliquer contre une face du logement 302', pour retenir axialement l'embout 400' dans la pièce 300'. L'embout d'extrémité 400' est, mis à part la présence de la collerette 401' et des nervures de renforcement 403', généralement identique pour le reste à l'embout 400 précédemment décrit. De préférence, la pièce d'étanchéité 300' est surmoulée sur l'embout 400'. Hormis la présence du logement 302' recevant la collerette 401' et les nervures 403', la pièce d'étanchéité 300' est pour le reste généralement identique à la pièce d'étanchéité 300 précédemment décrite. On remarquera toutefois que la pièce d'étanchéité 300' présente un rétrécissement 326', destiné au passage de la gaine et venant s'appliquer directement sur cette dernière, mais ne venant pas en prise sur l'embout d'extrémité 400'. Ce dernier est retenu par le logement 302' comme expliqué plus haut. La pièce d'étanchéité 300' présente une partie en forme de manchon 320' généralement identique à la partie 320 précédemment décrite, délimitée axialement à une extrémité par le logement 302'.

Finalement, la butée selon l'invention présente de nombreux avantages par rapport aux butées connues elle assure notamment un encliquetage franc du pied de fixation dans le perçage, un effort d'encliquetage réduit, un démontage possible sans détérioration du pied de fixation depuis le compartiment moteur, une filtration des vibrations parcourant la gaine et la possibilité d'utiliser la butée pour la fixation d'une couche de matériau insonorisant.

On peut, sans sortir du cadre de l'invention, réaliser la pièce d'étanchéité avec une partie en forme de manchon plus courte que les parties 320 et 320' précédemment décrites, par exemple sans paroi transversale 325.

## Revendications

1. Butée (1 ; 1') pour câble de commande, à monter dans un perçage (2) d'une tôle (3) pour servir de butée axiale à une extrémité (4) de gaine extérieure (5) de câble de commande, ladite butée (1 ; 1') comprenant :
- un pied de fixation allongé (100) en matière plastique rigide, à insérer par une première extrémité axiale (101) dans le perçage (2), traversé selon son axe longitudinal par un passage central (170) pour une âme intérieure (6) de câble montée à coulissement dans ladite gaine, ledit pied de fixation (100) comprenant des moyens d'ancrage (110) aptes à retenir axialement le pied de fixation au terme de son insertion dans le perçage, et une paroi substantiellement tubulaire (140) s'étendant axialement selon ledit axe longitudinal et définissant un logement (160) ouvert sur l'extrémité axiale du pied de fixation opposée à ladite première extrémité pour recevoir une extrémité de ladite gaine (5), et
- une pièce d'étanchéité (300 ; 300') en matériau élastomère retenue sur le pied de fixation, qui sert à étancher le perçage,
caractérisée en ce que ladite pièce d'étanchéité (300 300') est conformée pour isoler la gaine (5) du pied de fixation, de manière à s'opposer à la transmission de vibrations parcourant la gaine (5) vers le pied de fixation (100).

2. Butée selon la revendication 1, caractérisée en ce que ladite extrémité de gaine (5) est munie d'un embout d'extrémité (400 ; 400') en matière plastique rigide.

3. Butée selon la revendication 2, caractérisée en ce que la pièce d'étanchéité (300') est surmoulée sur ledit embout (400').

4. Butée selon l'une des revendications 1 à 3, caractérisée en ce que la pièce d'étanchéité (300 ; 300') présente une partie en forme de manchon (320 ; 320') apte à s'interposer radialement entre la gaine (5) et ladite paroi tubulaire (140) du pied de fixation.

5. Butée selon la revendication 4, caractérisée en ce que ladite partie en forme de manchon (320 ; 320') présente une surface radialement externe annelée.

6. Butée selon l'une des revendications 4 et 5, caractérisée en ce que ladite partie en forme de manchon (320 ; 320') présente une paroi transversale (325) formant radialement saillie vers l'intérieur, apte à s'interposer axialement entre la gaine (5) et le pied de fixation (100).

7. Butée selon la revendication 2 et l'une des revendications 3 à 6, caractérisée en ce que ledit embout d'extrémité (400') présente une collerette (401') formant radialement saillie vers l'extérieur et en ce que la pièce d'étanchéité (300') présente un logement (302') dans lequel s'engage ladite collerette (401'), de manière à retenir axialement l'embout d'extrémité (400') dans la pièce d'étanchéité (300').

8. Butée selon la revendication 2 et l'une des revendications 3 à 7, caractérisée en ce que ladite partie en forme de manchon (320 ; 320') présente un rétrécissement (326 ; 326') s'appliquant directement sur la gaine (5).

9. Butée selon l'une des revendications 1 à 8, caractérisée en ce que lesdits moyens d'ancrage comportent au moins deux languettes d'ancrage (110) aptes à se déformer élastiquement contre des bords du perçage (2) lors de l'insertion du pied de fixation dans celui-ci.

10. Butée selon la revendication 9, caractérisée en ce que chaque languette d'ancrage (110) se raccorde à sa base (111) sur ladite paroi tubulaire (140), et en ce que chaque languette d'ancrage est apte à se déformer élastiquement pour libérer le pied de fixation lorsqu'un effort est exercé radialement sur celle-ci.

11. Butée selon l'une des revendications 1 à 10, à monter dans un perçage d'une tôle avec une couche de matériau insonorisant (8) étant rapportée sur une face (9) de la tôle (3), caractérisée en ce que la butée (1) comporte une pièce de maintien (200) de la couche de matériau insonorisant (8), à rapporter sur ladite première extrémité du pied de fixation (100), après mise en place de ce dernier dans le perçage, et conformée pour s'appliquer axialement sur la couche de matériau insonorisant (8).

12. Butée selon la revendication 11, caractérisée en ce que le pied de fixation (100) et la pièce de maintien (200) comportent des premiers et seconds moyens de guidage respectifs aptes à coopérer pour guider en translation la pièce de maintien (200) selon l'axe longitudinal du pied de fixation (100) lors de son montage sur ce dernier, lesdits premiers moyens de guidage étant constitués par un conduit (175) à l'intérieur duquel est ménagé ledit passage, dont une extrémité définit ladite première extrémité (101) du pied de fixation (100) et dont l'autre extrémité se raccorde sur une paroi transversale (142) formant le fond du logement (160), du côté opposé à ce dernier, lesdits seconds moyens de guidage étant constitués par une extension tubulaire (223) à enfiler sur ledit conduit.

13. Butée selon l'une des revendications 11 et 12, caractérisée en ce que le pied de fixation (100) et la pièce de maintien (200) comportent des premiers et seconds moyens de retenue respectifs aptes à coopérer pour retenir axialement la pièce de maintien sur le pied de fixation.

14. Butée selon la revendication 13, caractérisée en ce que lesdits premiers moyens de retenue sont constitués par une jupe tubulaire (180) présentant un épaulement annulaire (181), et en ce que lesdits seconds moyens de retenue sont constitués par au moins une patte d'accrochage (210) apte à se déformer élastiquement lors du montage de la pièce de maintien (200) sur le pied de fixation (100) et apte à venir en prise, au terme de ce montage, sur ledit épaulement (181) pour retenir axialement la pièce de maintien (200) sur le pied de fixation (100).

15. Butée selon l'une des revendications 11 à 14, caractérisée en ce que la pièce de maintien (200) comporte un joint d'étanchéité (230) apte à s'interposer axialement entre celle-ci et la couche de matériau insonorisant.

16. Butée selon l'une des revendications 11 à 15, caractérisée en ce que la pièce de maintien (200) présente une fente radiale permettant sa mise en place sur le pied de fixation traversé par l'âme intérieure du câble.

17. Câble de commande équipé d'une butée conforme à l'une des revendications 1 à 16.

## Patentansprüche

1. Gegenlager (1; 1') für einen Bedienungsseilzug zum Anbringen in einer Bohrung (2) eines Bleches (3), welches dazu dient, ein Ende (4) des Außenmantels (5) des Bedienungsseilzuges axial zu halten, welches Gegenlager (1; 1')
- einen langgestreckten Befestigungsfuß (100) aus einem festen Kunststoffmaterial, der mit einem ersten axialen Ende (101) in die Bohrung (2) eingesetzt wird, und über seine Längsachse von einem zentralen Kanal (170) für einen Innendraht (6) des Seilzuges durchzogen ist, der in dem besagten Mantel gleitend verschiebbar angebracht ist, welcher Befestigungsfuß (100) Verankerungseinrichtungen (110), die den Befestigungsfuß nach seinem Einsetzen in die Bohrung axial festhalten können, und eine im wesentlichen rohrförmige Wand (140) umfaßt, die sich axial über die Längsachse erstreckt und einen Sitz (160) bildet, der am axialen Ende des Befestigungsfußes mündet, das dem ersten Ende gegenüberliegt, um ein Ende des besagten Mantels (5) aufzunehmen, und
- ein Dichtungsteil (300; 300') aus einem Elastomermaterial umfaßt, das am Befestigungsfuß gehalten ist und dazu dient, die Bohrung dicht abzuschließen,
dadurch gekennzeichnet, daß das Dichtungsteil (300; 300') so ausgebildet ist, daß es den Mäntel (5) des Befestigungsfußes so isoliert, daß es der Übertragung von Schwingungen entgegenwirkt, die durch den Mantel (5) in Richtung auf den Befestigungsfuß (100) gehen.

2. Gegenlager nach Anspruch 1, dadurch gekennzeichnet, daß das besagte Ende des Mantels (5) mit einem Endansatz (400; 400') aus einem festen Kunststoffmaterial versehen ist.

3. Gegenlager nach Anspruch 2, dadurch gekennzeichnet, daß das Dichtungsteil (300') an den Ansatz (400') angeformt ist.

4. Gegenlager nach einem der Ansprüche 1 bis 3, dadurch gekennzeichnet, daß das Dichtungsteil (300; 300') einen Bereich in Form einer Muffe (320; 320') hat, der so ausgebildet ist, daß er radial zwischen dem Mantel (5) und der besagten rohrförmigen Wand (140) des Befestigungsfußes angeordnet sein kann.

5. Gegenlager nach Anspruch 4, dadurch gekennzeichnet, daß der besagte Bereich in Form einer Muffe (320; 320') eine ringförmige radiale Außenfläche hat.

6. Gegenlager nach einem der Ansprüche 4 und 5, dadurch gekennzeichnet, daß der besagte Bereich in Form einer Muffe (320; 320') eine quer verlaufende Wand (325) aufweist, die einen radialen Vorsprung nach innen bildet und so ausgebildet ist, daß sie axial zwischen dem Mantel (5) und dem Befestigungsfuß (100) angeordnet sein kann.

7. Gegenlager nach Anspruch 2 und einem der Ansprüche 3 bis 6, dadurch gekennzeichnet, daß der besagte Endansatz (400') einen Kragen (401') aufweist, der einen radialen Vorsprung nach innen bildet, und daß das Dichtungsteil (300') eine Aufnahme (302') aufweist, in der der besagte Kragen (401) aufgenommen wird, derart, daß der Endansatz (400') axial im Dichtungsteil (300') gehalten ist.

8. Gegenlager nach Anspruch 2 und einem der Ansprüche 3 bis 7, dadurch gekennzeichnet, daß der besagte Bereich in Form einer Muffe (320; 320') eine Verengung (326; 326') aufweist, die direkt am Mantel (5) anliegt.

9. Gegenlager nach einem der Ansprüche 1 bis 8, dadurch gekennzeichnet, daß die besagten Verankerungseinrichtungen wenigstens zwei Verankerungszungen (110) umfassen, die so ausgebildet sind, daß sie sich elastisch gegen die Ränder der Bohrung (2) verformen, wenn der Befestigungsfuß darin eingesetzt wird.

10. Gegenlager nach Anspruch 9, dadurch gekennzeichnet, daß jede Verankerungszunge (110) sich an ihrer Basis (111) an die besagte rohrförmige Wand (140) anschließt und daß jede Verankerungszunge so ausgebildet ist, daß sie sich elastisch so verformt, daß der Befestigungsfuß freigegeben wird, wenn daran radial eine Belastung ausgeübt wird.

11. Gegenlager nach einem der Ansprüche 1 bis 10 zum Anbringen in einer Bohrung eines Bleches mit einer Schicht aus einem schalldämmenden Material (8), die auf eine Außenfläche (9) des Bleches (3) aufgetragen ist, dadurch gekennzeichnet, daß das Gegenlager (1) ein Teil (200) umfaßt, das die Schicht (8) aus einem schalldämpfenden Material an dem besagten ersten Ende des Befestigungsfußes (100) anliegend hält, nachdem letzterer in der Bohrung angeordnet ist, und das so ausgebildet ist, daß es sich axial an die Schicht (8) aus einem schalldämpfenden Material anlegt.

12. Gegenlager nach Anspruch 11, dadurch gekennzeichnet, daß der Befestigungsfuß (100) und das Halteteil (200) erste und zweite Führungseinrichtungen jeweils umfassen, die so ausgebildet sind, daß sie zusammenarbeiten, um das Halteteil (200) längs der Längsachse des Befestigungsfußes (100) verschiebbar zu führen, wenn dieser am letzteren montiert wird, welche erste Führungseinrichtungen aus einer Leitung (175) bestehen, in deren Innerem der besagte Kanal ausgebildet ist, deren eines Ende das besagte erste Ende (101) des Befestigungsfußes (100) bildet und deren anderes Ende sich an eine transversale Wand (142) anschließt, die den Boden der Aufnahme (160) bildet, und auf der gegenüberliegenden Seite die besagten zweiten Führungseinrichtungen aus einer rohrförmigen Verlängerung (223) bestehen, die auf die besagte Leitung aufgefädelt ist.

13. Gegenlager nach einem der Ansprüche 11 und 12, dadurch gekennzeichnet, daß der Befestigungsfuß (100) und das Halteteil (200) erste und zweite Halteeinrichtungen jeweils umfassen, die so ausgebildet sind, daß sie zusammenarbeiten, um das Halteteil axial am Befestigungsfuß zu halten.

14. Gegenlager nach Anspruch 13, dadurch gekennzeichnet, daß die besagten ersten Halteeinrichtungen aus einer rohrförmigen Schürze (118) bestehen, die eine Ringschulter (181) aufweist, und daß die zweiten Halteeinrichtungen aus wenigstens einem Verankerungsansatz (210) bestehen, der so ausgebildet ist, daß er sich beim Anbringen des Halteteils (200) am Befestigungsfuß (100) elastisch verformt und am Ende der Anbringung an der besagten Schulter (181) in Eingriff genommen werden kann, um das Halteteil (200) am Befestigungsfuß (100) axial zu halten.

15. Gegenlager nach einem der Ansprüche 11 bis 14, dadurch gekennzeichnet, daß das Halteteil (200) eine Dichtung (230) aufweist, die so ausgebildet ist, daß sie axial zwischen dem Halteteil und der Schicht aus dem schalldämpfenden Material sitzen kann.

16. Gegenlager nach einem der Ansprüche 11 bis 15, dadurch gekennzeichnet, daß das Halteteil (200) einen radialen Schlitz aufweist, der es erlaubt, dieses auf dem Befestigungsfuß anzubringen, der von dem Innendraht des Seilzuges durchzogen ist.

17. Bedienungsseilzug mit einem Gegenlager, das nach einem der Ansprüche 1 bis 16 ausgebildet ist.

## Claims

1. Mounting fitting (1; 1') for a control cable, to be mounted in a hole (2) in a sheet (3) to act as axial stop at one end (4) of an outer sheath (5) of a control cable, the said fitting (1; 1') comprising:
- an elongate attachment base (100) made of rigid plastic, to be inserted via a first axial end (101) in the hole (2), along the longitudinal axis of which there passes a central passage (170) for an inner core (6) of cable mounted to slide within the said sheath, the said attachment base (100) comprising anchoring means (110) capable of axially retaining the attachment base once it has been inserted in the hole, and a more or less tubular wall (140) extending axially along the said longitudinal axis and defining a housing (160) which is open to the axial end of the attachment base which is the opposite end to the said first end, so as to receive one end of the said sheath (5), and
- a sealing piece (300; 300') made of elastomeric material held on the attachment base, and which serves to seal the hole,
characterized in that the said sealing piece (300; 300') is shaped in such a way as to isolate the sheath (5) from the attachment base so as to oppose the transmission of vibration running through the sheath (5) towards the attachment base (100).

2. Mounting fitting according to Claim 1, characterized in that the said end of the sheath (5) is fitted with an end fitting (400; 400') made of rigid plastic.

3. Mounting fitting according to Claim 2, characterized in that the sealing piece (300') is overmoulded onto the said fitting (400').

4. Mounting fitting according to one of Claims 1 to 3, characterized in that the sealing piece (300; 300') has a part in the form of a sleeve (320; 320') that can be inserted radially between the sheath (5) and the said tubular wall (140) of the attachment base.

5. Mounting fitting according to Claim 4, characterized in that the said sleeve-shaped part (320; 320') has a ringed radially external surface.

6. Mounting fitting according to either of Claims 4 and 5, characterized in that the said sleeve-shaped part (320; 320') has a transverse wall (325) that projects radially inwards and is capable of being inserted axially between the sheath (5) and the attachment base (100).

7. Mounting fitting according to Claim 2 and one of Claims 3 to 6, characterized in that the said end fitting (400') has a collar (401') projecting radially outwards and in that the sealing piece (300') has a housing (302') in which the said collar (401') fits so as axially to retain the end fitting (400') in the sealing piece (300').

8. Mounting fitting according to Claim 2 and one of Claims 3 to 7, characterized in that the said sleeve-shaped part (320; 320') has a narrowing (326; 326') pressing directly on the sheath (5).

9. Mounting fitting according to one of Claims 1 to 8, characterized in that the said anchoring means comprise at least two anchoring tongues (110) capable of being deformed elastically against edges of the hole (2) when the attachment base is inserted into this hole.

10. Mounting fitting according to Claim 9, characterized in that each anchoring tongue (110) is connected at its base (111) to the said tubular wall (140), and in that each anchoring tongue is capable of being deformed elastically to release the attachment base when a load is exerted radially on this tongue.

11. Mounting fitting according to one of Claims 1 to 10, to be mounted in a hole in a sheet with a layer of sound-proofing material (8) attached to one face (9) of the sheet (3), characterized in that the mounting fitting (1) comprises a piece (200) for holding the layer of sound-proofing material (8) to be attached to the said first end of the attachment base (100) after the latter has been fitted into the hole, and shaped to press axially against the layer of sound-proofing material (8).

12. Mounting fitting according to Claim 11, characterized in that the attachment base (100) and the holding piece (200) comprise first and second respective guide means able to interact in order to guide the holding piece (200) in translation along the longitudinal axis of the attachment base (100) when it is being mounted on the latter, the said first guide means consisting of a duct (175) inside which the said passage is formed, one end of which defines the said first end (101) of the attachment base (100) and the other end of which connects to a transverse wall (142) forming the closed end of the housing (160), on the opposite side to the latter, the said second guide means consisting of a tubular extension (223) to be slipped over the said duct.

13. Mounting fitting according to one of Claims 11 and 12, characterized in that the attachment base (100) and the holding piece (200) comprise first and second respective retaining means capable of interacting in order axially to retain the holding piece on the attachment base.

14. Mounting fitting according to Claim 13, characterized in that the said first retaining means consist of a tubular skirt (180) which has an annular shoulder (181), and in that the said second retaining means consist of at least one catching tab (210) capable of being deformed elastically when the holding piece (200) is mounted on the attachment base (100) and capable of engaging, at the end of this mounting operation, on the said shoulder (181) in order axially to retain the holding piece (200) on the attachment base (100).

15. Mounting fitting according to one of Claims 11 to 14, characterized in that the holding piece (200) comprises a seal (230) which can be inserted axially between this holding piece and the layer of sound-proofing material.

16. Mounting fitting according to one of Claims 11 to 15, characterized in that the holding piece (200) has a radial slot allowing it to be fitted onto the attachment base through which the interior core of the cable passes.

17. Control cable fitted with a mounting fitting in accordance with one of Claims 1 to 16.
